# EUROPEAN PATENT SPECIFICATION

(11) **EP 3 530 091 B1**
(45) Date of publication and mention of the grant of the patent: **29.06.2022**
(21) Application number: 19158437.4
(22) Date of filing: 21.02.2019
(51) Int. Cl.: A01B 73/04, A01C 7/20, A01C 15/00

(54) **PLANTER**
PFLANZMASCHINE
MACHINE POUR PLANTER

(30) Priority: 21.02.2018 IT 201800002918
(43) Date of publication of application: 28.08.2019
(73) Proprietor: Maschio Gaspardo S.p.A., 35011 Campodarsego (PD) (IT)
(72) Inventor: DONADON, Gianfranco, 30023 Concordia Sagittaria (VE) (IT); CIAN, Raffaele, 33030 Campoformido (UD) (IT); BERT, Luca, 33075 Morsano al Tagliamento (PN) (IT); BERT, Roberto, 33075 Morsano al Tagliamento (PN) (IT)
(74) Representative: Cantaluppi, Stefano

(56) References cited:
- US-A1- 2003 110 996
- US-A1- 2004 025 766
- US-B1- 7 467 591
- US-B1- 7 472 663

## Description

The present invention relates to a seeder of the type including the characteristics mentioned in the preamble of the main claim.

An example of seeders of this type is known from the current production by the same applicant. The seeders concerned are of the single-seed type with an adjustable space between rows, wherein the distance between the rows of seed can be varied by means of simple, fast operations by the user. This solution is highly valued by farmers and contractors, since it allows them to sow different crops such as, for example, beetroot, maize, sunflowers and soya with a single mechanical means.

An important characteristic of the machine is its compactness, i.e. the limited rear projection, such that the seeder leans very closely on the tractor. This makes it possible to use tractors with a relatively low power and weight.

The machine has a frame with two foldable wings, and it can be transported in the closed position (with the wings folded back), whereas in working conditions (with the wings open and extended) the seed elements can be distributed over the entire length of the frame, including the wings. However, the compactness of this machine has a disadvantage, since it makes it difficult to access the tank (hopper) which contains the fertiliser or other granulates to be distributed at the same time as the seed.

Normally, for this purpose, a footboard is provided, positioned transversely between the sowing elements and the fertiliser tank. However, this involves dimensions which are incompatible with the desired and advantageous compactness of the machine, since it is necessary to lengthen the machine in order to accommodate this footboard.

It is not possible to position a footboard at the front, i.e. between the tractor and the seeder, because of the very limited gap and the size of the row indicator with movable arms of the seeder. Nor is it reasonably possible to position a footboard/steps between the sowing elements, since these must be able to be closed, packed up, leaning on one another in the road transport configuration. Footboards which can be tipped up or the like cannot be accommodated because of the interference with the movable units and the many pipes which complete the machine. Other solutions are described in US7472663, US20030084829, and US6588351.

US 2003/0110996 describes a towed seeder with a frame which can be folded between a transport position, with wings leaning on a towing beam thereof, and an operating position with the wings extended as the extension of a central part. Since a towed seeder is involved, the document does not pose the problem of restricting the size of the seeder. In this case, access to the containers for the seed and granulates in general is facilitated by walkways secured on the seeder parts which are articulated to one another, and which, during transport, are closed on the towing beam together with the movable wings.

The problem which forms the basis of the present invention is that of providing a machine which is structurally and functionally designed to at least partly eliminate at least one of the disadvantages encountered with reference to the cited prior art.

This problem is solved by the invention by means of a seeder produced in accordance with one or more of the appended claims. The invention relates in particular to a seeder of the trailer or semi-trailer type, which is designed to be connected directly to the three-point coupling of an agricultural tractor. According to the invention, the seeder comprises a frame which has at least one fixed part that extends axially, and movable wings which can be moved with respect to the fixed part, between an operating position extending axially in the extension of the fixed part, and a transport position gathered close to the fixed part. The seeder comprises at least one tank which is mounted on said fixed part of said frame, and a platform for access to said tank. On the tank, a rear part is defined extending jointly axially with the fixed part, and a lateral part is defined with which said tank ends transversely to the axial direction. The platform is connected to the frame laterally with respect to said at least one tank, i.e. at its lateral part, and it is articulated on the frame so as to be able to oscillate between an operating position in which it extends in parallel with the axis of the fixed part, and a rest position in which it is substantially perpendicular to the axis of said fixed part of said frame.

The characteristics and advantages of the invention will become more apparent from the following detailed description of a preferred embodiment thereof, illustrated by way of non-limiting example, with reference to the appended drawings in which:
- Fig. 1 is a perspective view of a seeder according to the invention coupled to an agricultural tractor;
- Fig. 2 is a perspective view on an enlarged scale of the detail indicated by the arrow II in fig. 1;
- Figs. 3 and 4 are respectively a perspective view and a view in front elevation of a detail of the seeder in the preceding figures in different operating conditions;
- Fig. 5 is a perspective view of the parts which constitute the platform of the seeder in the preceding figures.

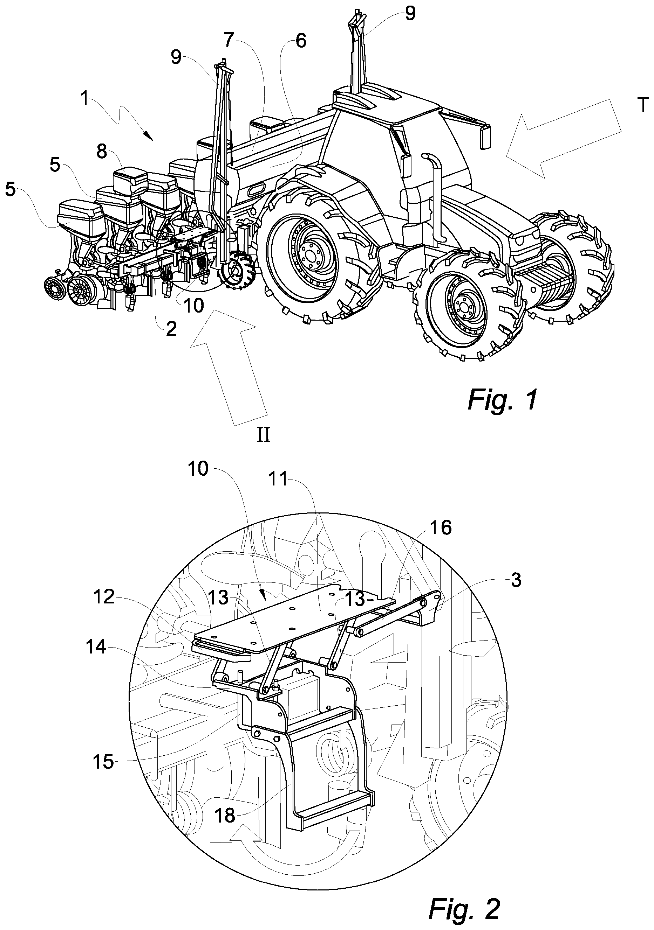

In the figures, 1 indicates as a whole a precision pneumatic seeder produced in accordance with the present invention. In fig.1, the seeder is connected to an agricultural tractor T.

The seeder 1 comprises a frame 2, preferably with a horizontal beam with prevalently axial extension, with a fixed part 3, and, preferably, two movable wings 4.

According to an embodiment of the invention shown in fig.1, the two movable wings 4, in an operating position, lie so as to form a bilateral extension of the fixed part 3. Advantageously, there are connected to the frame 2 a plurality of sowing elements 5 which are also movable, in a manner which in itself is known, between a position gathered in the centre, in which they are grouped close to one another along the only fixed part of the frame 2, and an operating position, in which they are distributed, preferably with a required space between rows, along the entire frame 2.

According to one embodiment of the invention, the seeder 1 comprises a tank 6 (or more than one disposed close to one another) mounted on the fixed part 3 of the frame 2. Preferably, the tank is closed at the top by a cover 7 which can be opened. This tank 6 is used to contain and distribute granulated products (for example chemical fertilisers) which are ancillary to the seed. Microgranulators 8 can be provided (on an ancillary basis) for the distribution of disinfectants and/or insecticides.

Finally, a respective row tracker 9 is connected at the sides opposite the central part of the frame 2. In order to facilitate access by the operators to the tank 6, a platform 10 is provided, which is connected to the frame 2 laterally with respect to at least one tank 6. In the example illustrated, this platform 10 can be mounted in an identical manner at each side of the fixed part 3 of the frame. It is understood that it is likewise possible to mount a single platform on a single side of the tank.

The platform 10 is articulated on the frame 2 such that it can oscillate between an operating position, in which it extends in parallel with the axis of the fixed part 3, and a rest position, in which it is substantially perpendicular to the axis of the fixed part 3 of the frame 2.

According to one embodiment of the invention the platform 10 comprises a footboard 11, preferably with a substantially rectangular form, provided with a handle 12. According to one embodiment, the handle 12 is located at the minor distal side thereof with respect to the fixed part of the frame 2, and is articulated by means of arms 13 on a base 14, which in turn is advantageously anchored on the corresponding movable wing 4 by means of brackets 15.

The footboard 11, the arms 13 and the base 14 form an articulated parallelogram mechanism which is connected to the fixed part 3 of the frame 2 by means of a connecting rod system 16. According to the invention, the footboard 11 is connected to the frame 2 by means of the parallelogram mechanism which is articulated such that, in the operating position, the footboard is retained above the movable wing 4 at a distance therefrom, whereas in the rest position, the footboard is leant against the movable wing 4 and optionally also against the at least one tank 6.

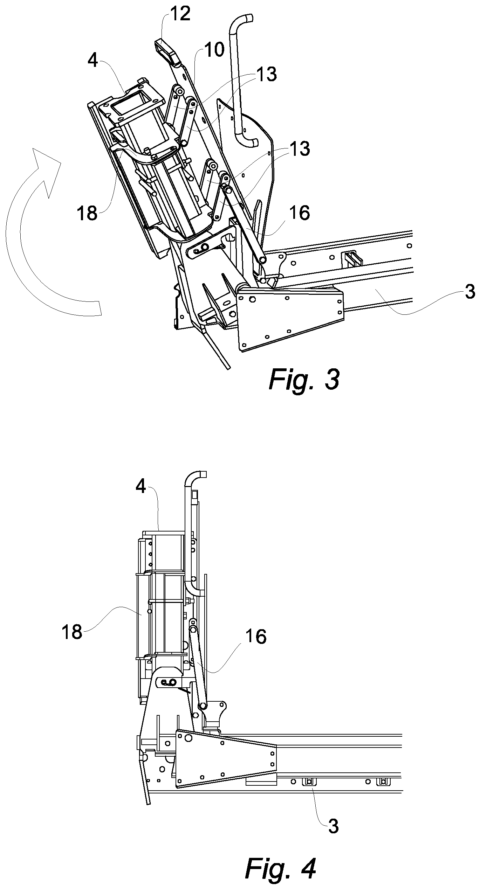

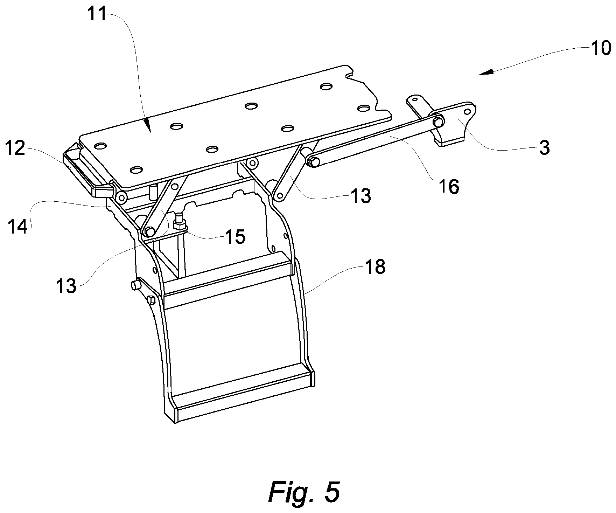

It can be observed that, advantageously, the articulation of the connecting rod system 16 on the fixed part of the frame and on one of the arms 13 takes place at points selected such that the platform 10 can oscillate with respect to the frame 2, between the operating position (figs. 1, 2 and 5), when the wings 4 are open, in which it extends in parallel with the axis of the fixed part 3 and of the movable wings 4, and the rest position (fig. 4), in which it is substantially perpendicular to the axis of the fixed part 3 of the frame.

Preferably, the frame 2 comprises at least the movable wing 4, which is articulated to the fixed part 3, and can be moved from and into the operating position in which it is an extension of the fixed part 3, the platform 10 being connected to the movable wing 4 in order to be moved therewith between the operating and rest positions.

Preferably, the frame 2 comprises two movable wings 4 so as to form a bilateral extension of the fixed part 3.

According to one embodiment, the seeder comprises a platform 10 for each movable wing 4.

According to a further aspect, the platform 10 comprises a base 14 which is intended to be made integral with the corresponding movable wing 4, a said footboard 11 mounted on said base 14 by means of an articulated parallelogram mechanism, a connecting rod system which connects said articulated parallelogram mechanism to the fixed part of the frame 2 so as to move said platform 10 into said operating position when said movable wing 4 is opened into the operating position.

Thanks to the articulated parallelogram mechanism, when it is in the operating position the footboard 11 is retained raised with respect to the corresponding movable wing 4, thus assisting access to the tank 6, whereas in the rest position it is leant against the movable wing 4 and/or the corresponding facing flank of the tank 6, in a condition of minimum space. The passage between the two positions is entirely automatic together with the opening or closure of the corresponding movable wing 4.

Preferably, the platform 10 comprises the footboard 11, and steps 18 for accessing the footboard 11.

In order to assist the operator in getting up onto the platform 10, access steps 18 with one or more rungs are provided, which steps are hinged on the base 14 or another point of the movable wing 4 of the frame 2, so as to be able to folded back, when not in use, below the movable wing 4 (figs. 3 and 4).

## Claims

1. Seeder comprising a frame (2) which has at least one fixed part (3) that extends axially so as to define an axial direction of the fixed part (3), at least one tank (6) mounted on said fixed part (3) of said frame (2), and a platform (10) for accessing said tank (6), said platform (10) is connected to the frame (2) laterally with respect to said at least one tank (6) and is mounted at a side of the fixed part (3), said platform (10) being articulated to the frame (2) so as to be able to oscillate between an operating position, in which it extends in parallel with the axial direction of the fixed part (3), in which it is substantially perpendicular to the axial direction of said fixed part (3) of said frame (2), wherein said frame (2) comprises at least one movable wing (4) which is articulated to said fixed part (3) and can be moved from and into an operating position in which it is an extension of said fixed part (3), said platform (10) being connected to said movable wing (4) in order to be moved therewith between said operating and rest positions, **characterized in that** said platform (10) comprises a footboard (11) connected to the wing (4) by means of a parallelogram mechanism which is articulated such that, in said operating position, said footboard is retained above the movable wing (4) at a distance therefrom, whereas in said rest position, said footboard (11) is leant against the movable wing (4) and optionally also against said at least one tank (6).

2. Seeder according to one or more of the preceding claims, wherein said frame (2) comprises two movable wings (4) so as to form a bilateral extension of the fixed part (3).

3. Seeder according to claim 2, comprising a platform (10) for each movable wing (4).

4. Seeder according to one or more of the preceding claims, when depending on claim 3, wherein said platform (10) comprises said footboard (11) and steps (18) for accessing said footboard (11).

5. Seeder according to one or more of the preceding claims, when depending on claim 3, wherein said platform (10) comprises a base (14) which is intended to be made integral with the corresponding movable wing (4), said footboard (11) being mounted on said base (14) by means of an articulated parallelogram mechanism, a connecting rod system which connects said articulated parallelogram mechanism to the fixed part (3) of the frame (2) so as to also move said platform (10) into the operating position when said movable wing (4) is opened into said operating position.

## Patentansprüche

1. Sämaschine mit einem Rahmen (2), der zumindest einen fixierten Teil (3), der sich axial erstreckt, um eine axiale Richtung des fixierten Teils (3) zu bilden, zumindest einen Tank (6), der auf dem fixierten Teil (3) des Rahmens (2) montiert ist, und eine Plattform (10) für den Zugang zum Tank (6) aufweist, wobei die Plattform (10) seitlich mit dem Rahmen (2) in Bezug auf den zumindest einen Tank (6) verbunden und an einer Seite des fixierten Teils (3) montiert ist, wobei die Plattform (10) am Rahmen (2) angelenkt ist, um zwischen einer Betriebsposition hin- und herpendeln zu können, in der sie sich parallel zur axialen Richtung des fixierten Teils (3) erstreckt und in der sie im Wesentlichen senkrecht zur axialen Richtung des fixierten Teils (3) des Rahmens (2) ist, wobei der Rahmen (2) zumindest einen beweglichen Flügel (4) aufweist, der am fixierten Teil (3) angelenkt ist und von einer und in eine Betriebsposition bewegt werden kann, in der er eine Verlängerung des fixierten Teils (3) ist, wobei die Plattform (10) mit dem beweglichen Flügel (4) verbunden ist, um damit zwischen der Betriebs- und der Ruheposition bewegt zu werden, **dadurch gekennzeichnet, dass** die Plattform (10) ein Trittbrett (11) umfasst, das mit dem Flügel (4) mittels eines Parallelogramm-Mechanismus verbunden ist, der angelenkt ist, so dass das Trittbrett in der Betriebsposition oberhalb des beweglichen Flügels (4) in einem Abstand davon gehalten wird, während das Trittbrett (11) in der Ruheposition gegen den beweglichen Flügel (4) und optional auch gegen den zumindest einen Tank (6) angelehnt ist.

2. Sämaschine nach einem oder mehreren der vorhergehenden Ansprüche, wobei der Rahmen (2) zwei bewegliche Flügel (4) aufweist, um eine zweiseitige Verlängerung des fixierten Teils (3) zu bilden.

3. Sämaschine nach Anspruch 2 mit einer Plattform (10) für jeden beweglichen Flügel (4).

4. Sämaschine nach einem oder mehreren der vorhergehenden Ansprüche, wenn abhängig von Anspruch 3, wobei die Plattform (10) das Trittbrett (11) und Stufen (18) für den Zugang zum Trittbrett (11) umfasst.

5. Sämaschine nach einem oder mehreren der vorhergehenden Ansprüche, wenn abhängig von Anspruch 3, wobei die Plattform (10) eine Basis (14) aufweist, die dazu bestimmt ist, mit dem entsprechenden beweglichen Flügel (4) einstückig ausgebildet zu werden, wobei das Trittbrett (11) an der Basis (14) mittels eines Gelenk-Parallelogramm-Mechanismus und eines Verbindungsstangensystems montiert ist, das den Gelenk-Parallelogramm-Mechanismus mit dem fixierten Teil (3) des Rahmens (2) verbindet, um auch die Plattform (10) in die Betriebsposition zu bewegen, wenn der bewegliche Flügel (4) in die Betriebsposition geöffnet wird.

## Revendications

1. Semoir comprenant un bâti (2) qui a au moins une partie fixe (3) qui s'étend axialement afin de définir une direction axiale de la partie fixe (3), au moins un réservoir (6) monté sur ladite partie fixe (3) dudit boîtier (2), et une plateforme (10) pour avoir accès audit réservoir (6), ladite plateforme (10) est raccordée au bâti (2) latéralement par rapport audit au moins un réservoir (6) et est montée sur un côté de la partie fixe (3), ladite plateforme (10) étant articulée par rapport au bâti (2) afin de pouvoir osciller entre une position opérationnelle, dans laquelle elle s'étend parallèlement à la direction axiale de la partie fixe (3), dans laquelle elle est sensiblement perpendiculaire à la direction axiale de ladite partie (3) dudit bâti (2), dans lequel ledit bâti (2) comprend au moins une aile mobile (4) qui est articulée par rapport à ladite partie fixe (3) et peut être déplacée depuis et dans une position opérationnelle dans laquelle elle est une extension de ladite partie fixe (3), ladite plateforme (10) étant raccordée à ladite aile mobile (4) afin d'être déplacée avec cette dernière entre lesdites positions opérationnelle et de repos, **caractérisé en ce que** ladite plateforme (10) comprend un repose-pied (11) raccordé à l'aile (4) au moyen d'un mécanisme parallélogramme qui est articulé de sorte que, dans ladite position opérationnelle, ledit repose-pied est retenu au-dessus de l'aile (4) mobile à une distance de cette dernière, alors que dans ladite position de repos, ledit repose-pied (11) est appuyé contre l'aile (4) mobile et facultativement également contre ledit au moins un réservoir (6).

2. Semoir selon une ou plusieurs des revendications précédentes, dans lequel ledit bâti (2) comprend deux ailes (4) mobiles afin de former une extension bilatérale de la partie fixe (3).

3. Semoir selon la revendication 2, comprenant une plateforme (10) pour chaque aile (4) mobile.

4. Semoir selon une ou plusieurs des revendications précédentes, lorsqu'elle dépend de la revendication 3, dans lequel ladite plateforme (10) comprend ledit repose-pied (11) et des marches (18) pour avoir accès audit repose-pied (11).

5. Semoir selon une ou plusieurs des revendications précédentes, lorsqu'elle dépend de la revendication 3, dans lequel ladite plateforme (10) comprend une base (14) qui est prévue pour être rendue solidaire de l'aile (4) mobile correspondante, ledit repose-pied (11) étant monté sur ladite base (14) au moyen d'un mécanisme parallélogramme articulé, un système de tige de raccordement qui raccorde ledit mécanisme parallélogramme articulé à la partie fixe (3) du bâti (2) afin de déplacer également ladite plateforme (10) dans la position opérationnelle lorsque ladite aile (4) mobile est ouverte dans ladite position opérationnelle.
